(19) **Europäisches Patentamt**
**European Patent Office**
**Office européen des brevets**

(11) **EP 4 167 140 A1**

(12) **EUROPEAN PATENT APPLICATION**

(43) Date of publication:
**19.04.2023 Bulletin 2023/16**

(21) Application number: **22202001.8**

(22) Date of filing: **17.10.2022**

(51) International Patent Classification (IPC):
**G06N 3/045** (2023.01)    **G06N 3/092** (2023.01)
**G06N 3/048** (2023.01)    **G06N 5/045** (2023.01)
**G05B 11/42** (2006.01)    **G05B 13/02** (2006.01)

(52) Cooperative Patent Classification (CPC):
**G06N 3/045; G05B 11/42; G05B 13/027;**
**G06N 3/048; G06N 3/092; G06N 5/045**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.10.2021 US 202117503636**

(71) Applicant: **Infineon Technologies Austria AG
9500 Villach (AT)**

(72) Inventors:
• **SCHWABE, Benjamin**
**81245 München (DE)**
• **FURTNER, Wolfgang**
**82008 Unterhaching (DE)**
• **SENJAB, Tarek**
**80805 München (DE)**

(74) Representative: **Stöckeler, Ferdinand
Schoppe, Zimmermann, Stöckeler
Zinkler, Schenk & Partner mbB
Patentanwälte
Radlkoferstrasse 2
81373 München (DE)**

(54) **INTERPRETABLE NEURAL NETWORKS FOR NONLINEAR CONTROL**

(57) A controller circuit implements an interpretable neural-network-based proportional integral derivative (PID) control function. The controller circuit comprises a controller output signal for input to a nonlinear plant, a controller input signal representing an error in an output of the nonlinear plant, and a neural network configured to calculate the controller output signal from the controller input signal by summing a first signal depending on a current value of the controller input signal, a second signal generated at least in part by a first neural network estimating a differential of the controller input signal, and a third signal generated at least in part by a second neural network estimating an integral over time of the controller input signal.

**Description**

TECHNICAL FIELD

The present invention generally relates to artificial neural networks and particularly relates to the use of artificial neural networks for nonlinear control applications.

BACKGROUND

Reinforcement learning is applicable to many control problems, like motor control or power conversion. While academic interest in reinforcement learning techniques is high, these techniques are rarely used in practical applications, as it seems the immense flexibility provided by reinforcement learning cannot make up for the lack of *a priori* known generalization properties and the lack of understanding as to exactly what an artificial neural network does. This lack of insight into precisely how the neural network is performing its control functions means that it is difficult to formulate an adequate validation strategy. This problem leaves control practitioners preferring classical regulation schemes. This is true, for example, with respect to the field of high-power converter circuits, or for circuits where the load is expensive or delicate, such as in power supplies for computer CPUs.

Due to the lack of interpretability and therefore general statements with respect to stability of the controlled system, practitioners stick often with the classical regulation schemes, like proportional-integral-derivative (PID) control. These approaches are well known, and many theorems regarding the properties of these control schemes have been developed. Especially in high-stakes applications, these well-established methods are undisputed.

However, these classical schemes often require careful tuning of their parameters. In many cases they also are unable to adequately handle nonlinearities in the plant. For highly nonlinear systems, computationally expensive methods like model predictive control provide a suitable alternative. These methods are often used for systems with large open-loop settling times and that are highly nonlinear dynamic.

For systems with short open-loop settling times, PID control is still the predominantly used regulation scheme, although it requires careful and therefore time-intensive tuning of the parameters. Often, an expert in the application field (e.g., a power-electronics system engineer, in the case of power converters) must perform the tuning. The methods used might include an (educated) trial and error, or the Ziegler-Nichols tuning method. But, disturbances, like the heating of the power semiconductors, cannot be addressed properly with this approach. Hence, several extensions to the classical regulation schemes have been developed, further complicating the control techniques.

SUMMARY

A class of artificial neural networks that can be applied to control with a reinforcement learning strategy and that provide interpretability and therefore a strategy for a mathematically sound validation strategy is described in detail below. Training and validation approaches are also described.

Embodiments described below include an example controller circuit that implements an interpretable neural-network-based proportional integral (PI) control function or proportional integral derivative (PID) control function. The controller circuit comprises a controller output signal for input to a nonlinear plant, a controller input signal representing an error in an output of the nonlinear plant, and a neural network configured to calculate the controller output signal from the controller input signal by summing at least a first signal depending on a current value of the controller input signal and a second signal generated at least in part by a first neural network estimating an integral over time of the controller input signal. In the case of a PID control function, the neural network calculates the controller output signal by summing the first signal, which depends on the current value of the controller input signal, the second signal, which estimates the integral over time of the controller input signal, with a third signal generated at least in part by a second neural network estimating a differential of the controller input signal.

Of course, the present invention is not limited to the above features and advantages. Those of ordinary skill in the art will recognize additional features and advantages upon reading the following detailed description, and upon viewing the accompanying drawings.

BRIEF DESCRIPTION OF THE DRAWINGS

Figure 1 illustrates the basic structure of a control system.

Figure 2 shows a basic neural network architecture interpretable as PID regulation.

Figure 3 illustrates an example neural network architecture extending the PID network.

Figure 4 shows another example of a nonlinear extension of the PID-based network.

Figure 5 illustrates details of a reLU transfer function layer.

Figure 6 shows another example network, using a combined reLU layer.

Figure 7 illustrates an implementation of conditional integration anti-windup regulation as a neural network.

## DETAILED DESCRIPTION

As noted above, a lack of insight into precisely how an artificial neural network is performing its control functions means that it is difficult to formulate an adequate validation strategy for high-stake applications. This problem leaves control practitioners preferring classical regulation schemes. This is true, for example, with respect to the field of high-power converter circuits.

This lack of human understandability is often addressed by the field of explainable or interpretable artificial intelligence. As discussed in Rudin et al., "Interpretable Machine Learning: Fundamental Principles and 10 Grand Challenges," arxiv.org/pdf/210.11251 (July 2021), a neural network is explainable if a result produced by the neural network can be explained after it was obtained. The neural network is interpretable if its mechanism can be understood more generally, i.e., a human can understand how the result was achieved no matter the input and the resulting output. In high-stakes control problems (e.g., high-power converter circuits), an interpretable artificial intelligence approach accompanied by a mathematically sound validation approach is an absolute must-have.

Accordingly, what is needed is a class of artificial neural networks that can be applied to control with a reinforcement learning strategy and that provides interpretability and therefore a mathematically sound validation strategy. In the discussion that follows, these artificial neural networks are referred to as, simply, neural networks.

To simplify the presentation, the techniques and circuits discussed herein are described in the context of a switched-mode power converter, e.g., a typical DC-DC buck converter, where the controller provides a PID control function. However, these techniques and circuits can be canonically extended to all kind of controlled systems - not only in electronics. Further, by omitting the differential element of the control function, the techniques and circuits described herein can be extended to PI control functions as well.

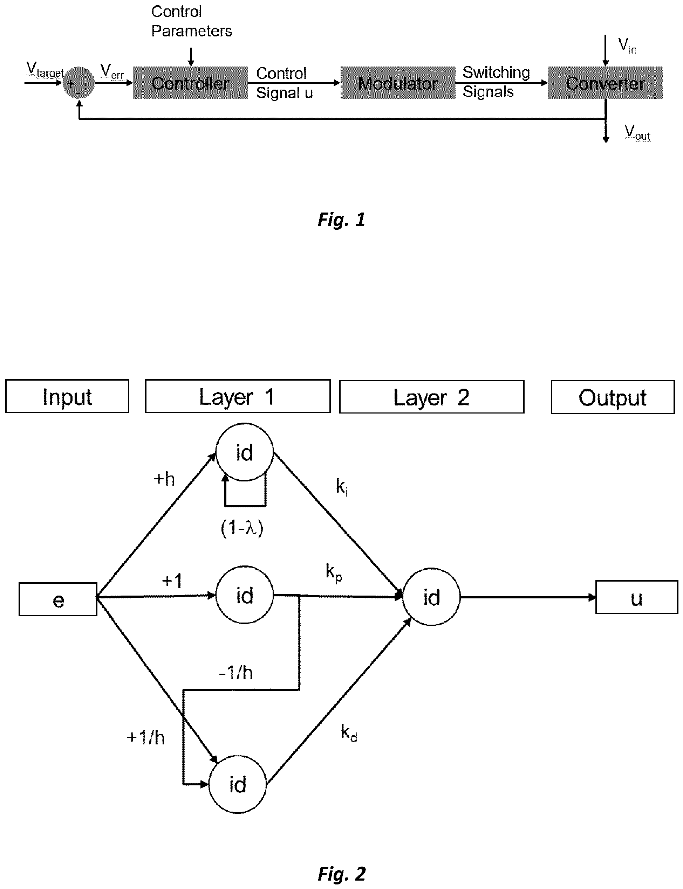

In an example of a switched-mode power converter, the controller is provided with the difference of the required target voltage $V_{target}$ and the actual output voltage $V_{out}$ of the converter. Figure 1 is a block diagram illustrating an example power converter. As seen in the figure, the input to the controller is an error voltage $V_{err}$, which is the difference between the target voltage $V_{target}$ and the converter output voltage $V_{out}$. The controller generates the control signal u, which in this case can be interpreted as the duty cycle information for a pulse-width modulator. The modulator then turns this into the switching signals for high-side and low-side MOSFET switches in the converter, for example. Using the terminology of control theory, the converter, or the converter and modulator considered together, are the "plant" of the illustrated system, i.e., the portion of the system that is controlled by the controller. More formally, the term "plant" is defined as a combination of process and actuator, having a transfer function that transforms an input to the plant into an output of the plant. In the case of a power converter, and in many other cases, this plant is a nonlinear plant.

Commonly, the controller in power converter circuits and other systems is based upon the proportional-integral-derivative (PID) regulation scheme. The transfer function for such a controller can be written as:

$$u(t) = k_p V_{err}(t) + k_i \int_0^t V_{err}(t)dt + k_d \frac{dV_{err}(t)}{dt}.$$

The time discretized formulation of this transfer function leads to the following equation:

$$DC[n] = k_p e[n] + k_i h e[n] + k_i h \sum_{i=0}^{n-1} e[i] + k_d \frac{e[n]-e[n-1]}{h} \quad ,$$

with h representing the time duration between two samples.

This equation can be implemented as the recurrent neural network shown in Figure 2. Thus, the illustrated neural network is interpretable as a PID controller. Here, the top neuron in Layer 1 represents the integral part, the middle neuron in Layer 1 the proportional term, and the bottom neuron in Layer 1 the differential part. The link between these latter two neurons, creating another recurrent path in this network, is also worth noting. All neurons in Layer 1 and Layer 2 in this basic implementation use the identity (id) as the activation function.

Implementations of this neural network may feature certain weights given by design and others that are trainable. The weights that are fixed by design may be those that correspond to or scale for step sizes or sampling time intervals, in some embodiments, such as the weights *h*, -1/*h*, and 1/*h* in Figure 2. The trainable weights, i.e., those that are adjusting while training the neural network, might be the classical regulation parameters $k_p$, $k_i$, and $k_d$, for example.

All validation strategies, such as a small-signal bode plot analysis combined with a stability criterion based upon phase and gain margin, hold for this neural network controller.

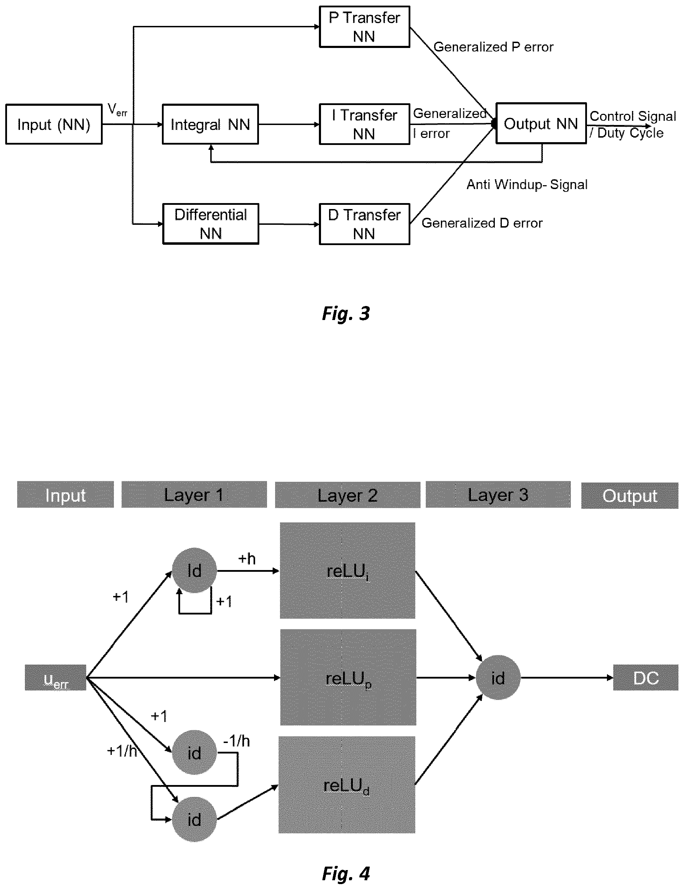

Figure 3 illustrates another example of top-level neural network architecture, interpretable as a PID controller, where each of the proportional, integral, and derivative terms are propagated through a transfer neural network, e.g., to provide for a non-linear extension of the PID control function.

The circuit/implementation shown in Figure 3 includes an input neural network (NN), which provides an error signal $V_{err}$. In this example, the error signal is a voltage error, representing the difference between an output voltage of controlled circuit and a target voltage. More generally, the error signal represents the difference between any measured state and a target state. If the error signal is already available and can be used as-is, this can simply be an input neuron. Otherwise, this input neural network may comprise a neural network to derive the error from the input. This neural network might have just one neuron, no trainable parameters, and an identity transfer function, in some embodiments. In other embodiments, this may comprise neural network structures (including recurrent neural network structures) for filtering and the like.

The output neural network, at the other end of the architecture shown in Figure 3, sums up the proportional, integral, and differential error components, illustrated as "generalized P error," "generalized I error," and "generalized D error," respectively. In some embodiments, the output may be clamped, using any of a variety of clamping transfer functions in the output neural network. This may be necessary because a pulse-width modulator that receives the output control signal only allows a range of zero to 1, for example. In some embodiments, the output signal, or a signal related to or derived from the output signal, may be fed back from the output neural network into the integral neural network, to prevent the well-known integral windup problem.

The integral neural network provides a neural-network-based approximation for the time integral of the input, which in the illustrated example is the error signal $V_{err}$. Typically, a recurrent neural network may be used here. The simplest form is shown in Figure 2. Likewise, the derivative or differential neural network provides a neural-network-based approximation of the differential of the input. Again, a recurrent neural network may be used here, and a simple form is shown in Figure 2. Finally, the proportional error is directly available. Although there is no neural network corresponding to the integral and derivative networks shown in Figure 3, one might consider this to be a "residual" neural network.

Any or all of the three components of the PID-based network can be fed through a transfer neural network, which can be used to provide a piecewise-linear mapping of the component to the output. In Figure 3, these transfer functions are shown as "P Transfer NN," "I Transfer N," and "D Transfer NN."

Figure 4 illustrates a neural network architecture for a non-linear extension of the PID network, utilizing rectified linear unit (reLU) transfer functions. In this illustration, the circles represent single neurons, while the rectangles shown in Layer 2 represent entire layers, or sub-networks.

The rectified linear unit transfer function of a neuron is defined by the following formula:

$$reLU(x) = \begin{cases} 0, & x < 0 \\ x, & x \geq 0 \end{cases},$$

and is a commonly used activation function in a wide range of neural networks. Their wide usage is due to that they can approximate any continuous function and are computationally inexpensive.

This provides a canonical extension of the PID network from Figure 2 to nonlinear control functions. Instead of propagating the proportional, integrational and differential error parts with only proportional parameters, a layer of transfer functions may be used to modify one, several, or all of the proportional, integral, and derivative terms. In the example architecture shown in Figure 3, these transfer functions are illustrated as reLU transfer functions.

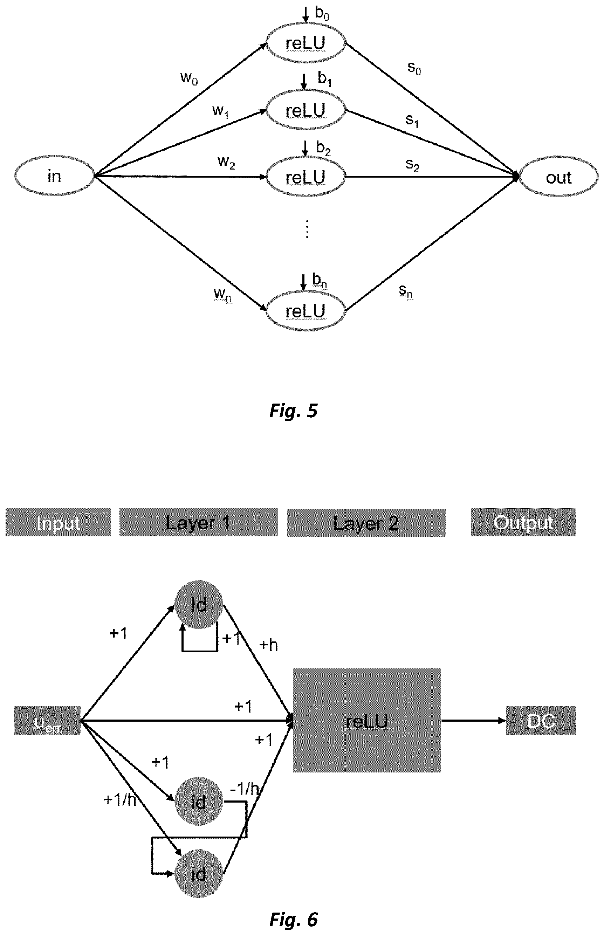

The interior of the reLU layer is shown in Figure 5. Mathematically, speaking this can be formulated as

$$y = \vec{s} * reLU(\vec{w} * x + \vec{b}) \qquad ,$$

with reLU being component-wise executed on its input vector, $x \in \mathbb{R}$ denoting the input value, $y \in \mathbb{R}$ denoting the

output value, $\vec{w} \in \mathbb{R}^n$ denoting the input weight vector, $\vec{s} \in \mathbb{R}^n$ denoting the summation weight vector, and $\vec{b} \in \mathbb{R}^n$ denoting a bias vector. This generalized formula allows the representation of any continuous, piecewise linear function with n pieces. Note that any or all of the weights $\vec{w}$, $\vec{s}$, and $\vec{b}$ may be trainable, in various implementations.

Assume, for example, that $\vec{s}$ = (-1, 1) and $\vec{w}$ = (w1, w2), with w1 < 0 and w2 > 0, and $\vec{b}$ = (0, 0). In this case, the reLU layer consists of two neurons - one covering positive values and one covering negative ones. The special case $\vec{w}$ = (-1, 1) leads to the identity. But, functions with a break at zero may be created by choosing $w_1 \neq -w_2$. In case a negative error would be more critical, $|w_1| > |w_2|$ would be chosen. Note also that different implementations and/or different weights may be used for any or each of the reLU transfer function layers shown in Figure 4.

The approaches shown in Figures 3-5 also give rise to another generalization in which the three reLU layers are combined, such that all input values can influence all reLU values. In this case, there is no real separation of these three errors. This is shown in Figure 6. One might make use of this approach if, for a negative error, the differential is also negative, so that the controller reacts more aggressively than in the case that the differential error is positive while the proportional error is still negative.

Globally, the regulation has become nonlinear, but it is piecewise linear to the input space. Hence, validation is no longer as straight forward as in the purely linear case. Nevertheless, the results piecewise linear control is closely related to gain scheduling control and the validation techniques used in this field can be applied canonically, e.g., stability in each linear part is investigated, and then the transition from one region of linearity into another is investigated.

Note that the use of a reLU transfer function may lead to the dying neuron problem, i.e., where there is a vanishing gradient for x < 0. Various alternatives to the reLU may be used instead of the reLU, such as a leaky rectified linear unit transfer function layer; a parametric rectified linear unit transfer function layer, or a Gaussian error linear unit. Note that in some cases, one or more of these more advanced activation functions can be used as a transfer network during a training/learning phase, and a reLU function substituted for use as the transfer network during the inference phase, using the trained weights, to save computational effort in the latter phase.

The various network structures presented here can be used without additional pre-or post-processing of the input or output data. In some cases, however, it may also make sense to embed all or parts of the networks shown above in a larger neural network, or combine networks shown above with some classical feature engineering methods, such as principal component analysis and the like.

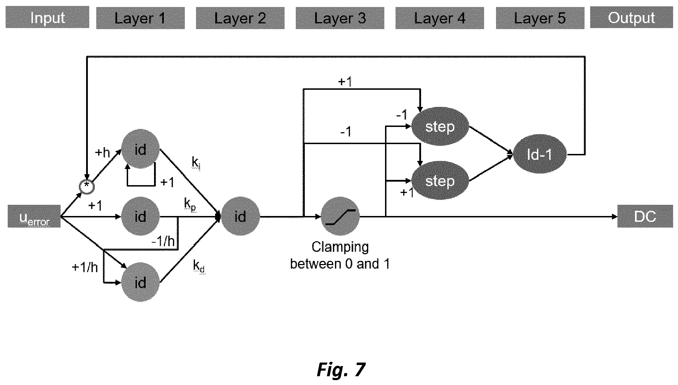

For instance, clamping and anti-windup features were mentioned above, in connection with Figure 3. In case the power converter features a pulse width modulation, clamping the output to the interval [0; 1] is required. This can lead to windup of the integral part, which can be addressed with any of several anti-windup methods, such as conditional integration. These methods can also be interpreted as neural networks, which interact with the neural network structures discussed above. One possible neural network implementation is given in Figure 7, which illustrates a network that combines the PID-based network from Figure 2 with clamping and anti-windup features.

It should be appreciated that the differential component of any of the control circuits shown in Figures 3-5 may be omitted, resulting in a proportional-integral (PI) control function, which is another commonly used and well-known control function. The variations described above for the PID-based controller may be applied as well to the PI-based variant.

Depending on the requirements imposed by the application (e.g., switching frequency, etc.), the neural-network-based controllers described here may be implemented as a piece of software running on a general-purpose processor, a piece of digital hardware, or even as an analog circuit. Various implementations may use any combination of these, with analog-to-digital converters (ADCs) and digital-to-analog converters (DACs) used as necessary to convert analog signals to the digital domain and vice-versa.

Now that the interpretable PID-based or PI-based neural network architecture has been explained, a method for tuning its parameters ("training") can be discussed. Specifications for control systems commonly address the (small signal) frequency domain with a Bode plot analysis and a stability criterion based on phase and gain margin, and for application-dependent transient load profiles. One possible approach is described in Marian Kannwischer's "Machine Learning Assisted Optimization of DC-DC Converters" Bachelor Thesis at the Technical University of München, submitted March 30th, 2020. In the following, it is shown that such an approach can be interpreted as a reinforcement learning approach.

A common approach for addressing the stability of a PID-regulated system is formulating a stability criterion based on phase and gain margin obtained from a Bode plot analysis. One possible mathematical formulation of the parameter tuning is given by the following constrained optimization:

*find $\lambda$:*

$$f_{bandwidth}(\lambda) \quad \rightarrow \quad max!$$

$$\varphi(\lambda) \qquad > \qquad \varphi_{thres} \qquad ,$$

$$\gamma(\lambda) \qquad < \qquad \gamma_{thres}$$

with $f_{bandwidth}$ representing the bandwidth of the control loop depending on the regulation parameters $\lambda$, $\varphi$ the phase margin as a function of the regulation parameters $\lambda$, $\gamma$ the gain margin as a function of the regulation parameters $\lambda$, $\varphi_{thres}$ the limit of the phase margin, and $\gamma_{thres}$ the limit of the gain margin defined by the stability criterion.

In the case of a neural-network-based controller, the regulation parameters $\lambda$ represent all the tunable weights and biases and the optimization problem above can be transferred into a reward function:

$$\mathrm{P}(\lambda) = f_{bandwidth}(\lambda) - \eta_1 \max\left(0, \varphi_{thres} - \varphi(\lambda)\right) - \eta_2 \max\left(0, \gamma(\lambda) - \gamma_{thres}\right),$$

with $\eta_1 > 0$ and $\eta_2 > 0$ denoting the weights of the penalty terms. Of course, different norms than the one used here can be used, in various implementations.

This tuning approach can thus be interpreted as a reinforcement learning problem, and the common methods of solving these problems can be applied to this task.

One downside of a purely Bode plot is the fact that it is based on only a small signal analysis. For fast and large changes of the load, this analysis no longer provides correct results and consequently often leads to overly aggressive regulation schemes. This is commonly addressed by also tuning the control parameters in time domain: here the voltage response of the converter to a transient load profile is investigated and the profile includes some larger and faster load changes. How the quality of the voltage response can be determined is described in Kannwischer, cited above; this can be viewed as a reinforcement learning topic for a neural-network-based controller as was described above. In addition, reinforcement learning approaches in the frequency and time domains can be coupled in the way presented in Kannwischer.

While the trained network control scheme (often referred to as "policy," in the context of reinforcement learning) needs to always be running inside the controller (inference), the reinforcement learning algorithm (the evaluation of the target function and some optimizer for the training procedures) can be put inside the controller itself or executed on a host computer that has a high-speed connection for data capturing during the training procedures. In the latter case, once the training has been completed, these connections can be disabled and the neural network kept constant from then on.

The developed neural network architectures described herein can be interpreted as an array of PID controllers or PI controllers running in parallel. For validation, depending on given conditions (e.g., the error value), one of these controllers' output can be used. As long as the selection of the controller stays constant, the Bode plot analysis can be used for addressing stability. The selection is by definition constant in the steady-state case of the converter (the differential part is zero, the proportional and the integral part are constant). This observation reduces the overall question of stability to the stability of the individual linear parts - which can be readily addressed - and the transitions between them. Fortunately, there are only a finite set of transitions possible, as the number of reLU neurons is finite.

Assuming that the regulation is stable for any given steady-state-case, the only way the system could become unstable is by it constantly switching between two or more of the parallel PID controllers. These transient cases need to become part of the profile load for the time-domain reinforcement learning problem.

Assuming that the system has been properly trained, no changes need to be made compared to a system making use of a classical control scheme, when put into use in the field. During the design-in phase, a tool is required that enables to run the necessary tests, captures the system's response to a control signal and changes the parameters of the neural network accordingly. This is always the case for any reinforcement learning based approach.

In view of the various examples and illustrations discussed above, it will be appreciated that embodiments of the systems described herein include a controller circuit, comprising a controller output signal for input to a nonlinear plant and a controller input signal representing an error in an output of the nonlinear plant. The controller circuit further comprises a neural network configured to calculate the controller output signal from the controller input signal by summing a first signal depending on a current value of the controller input signal, and a second signal generated at least in part by a first neural network estimating an integral over time of the controller input signal. Thus, as shown in Figures 2-4, 6, and 7, the controller circuit generates a proportional term (the first signal) and an integral term (the second signal). In some embodiments, the control function implemented by the controller circuit is a PID-based control function. In such embodiments, the controller circuit sums the first signal, which depends on the current value of the controller input signal, and the second signal, which represents the integral over time of the controller input signal, with a third signal generated at least in part by a second neural network estimating a differential of the controller input signal. This differential component is also shown in Figures 2-4, 6, and 7, along with the proportional and integral components.

In some embodiments of the controller circuit, at least one of the first and second neural networks is a recurrent neural network. In others, one or both of these neural networks could be a feedforward network, e.g., with a time series stored externally of the network and fed into the feedforward network. In some embodiments, the input weights to the first and second neural networks are non-trainable weights, i.e., weights that are fixed by design and not adapted during a training or learning phase. These might represent scaling factors, for example, corresponding to step sizes or sampling intervals that are particular to the implementation. In other embodiments, however, it might be desirable to tune one or more of these parameters as well, in which case the corresponding weights may be trainable.

In some embodiments, the controller circuit is configured to calculate the controller output signal by summing the first signal, second signal, and, if present, the third signal, using trainable weights, i.e., weights that are adapted during a training or learning phase. Note that in some embodiments, the controller circuit may be configured so that once a training phase is completed, the adapted weights are "locked," to prevent further changes.

In some embodiments of the PID-based controller circuit, a weighted version of the first signal is linked to an input of the second recurrent neural network. This is shown in Figures 2 and 4, for example, where a weighted version of the proportional signal is fed into the differential network.

In some embodiments of the controller circuit, the neural network further comprises at least one transfer neural network having at least one output from the first and second neural networks as an input, where the calculated controller output signal is based on the output of the at least one transfer neural network. Various examples of this were illustrated in Figures 3, 4, and 6. In these embodiments, the proportional signal, i.e., the "first signal" discussed above, may be fed directly into a transfer neural network.

In some of these embodiments that comprise one or more transfer neural networks, at least one of the transfer neural networks might comprise at least one rectified linear unit transfer function layer transforming an output x from one of the first, second, and third neurons to an output y of the at least one rectified linear unit transfer function layer according to:

$$y = reLU(\vec{w} * x + \vec{b}),$$

$$reLU(z) = \begin{cases} 0, & z < 0 \\ x, & z \geq 0 \end{cases}$$

where $\vec{w}$ is a vector of input weights, $\vec{b}$ is a bias vector, and . This was discussed above in connection with Figures 4 and 5, for example. In some of these embodiments, at least one of the vectors $\vec{w}$ and $\vec{b}$ may comprise trainable parameters. Some controller circuits may contain three such rectified linear unit transfer function layers corresponding to the first, second, and third signals, respectively.

Other embodiments may comprise one or more of a leaky rectified linear unit transfer function layer; a parametric rectified linear unit transfer function layer; and a Gaussian error linear unit, for the transfer neural network.

Other features may be added to the neural networks discussed above. For example, in some controller circuits according to any of the embodiments discussed above, the neural network further comprises a layer clamping the sum of the first signal, second signal, and, if present, the third signal, to a predetermined range. In some of these and in some other embodiments, the neural network may comprise a feedback signal, based on the sum of the first, second, and third signals, fed into the first recurrent neural network and configured to prevent integral windup in the first recurrent neural network. This feedback signal may be based on a clamped version of a weighted sum of the first, second, and third signals, for example.

In some embodiments of the controller circuits described above, the nonlinear plant is a power converter circuit. It will be appreciated, however, that controller circuits like those described above may be used in any of a variety of applications where a controller circuit interpretable as a PID controller is desired.

Any of the controller circuits described above can be trained, by tuning trainable weights of the neural network using a reward function, as discussed above. In some embodiments, the reward function may take the form:

$$P(\lambda) = f_{bandwidth}(\lambda) - \eta_1 \max\left(0, \varphi_{thres} - \varphi(\lambda)\right) - \eta_2 \max\left(0, \gamma(\lambda) - \gamma_{thres}\right),$$

where $\lambda$ represents the trainable weights of the neural network, $f_{bandwidth}(\lambda)$ is the bandwidth of the control loop comprising the recurrent neural network, $\varphi(\lambda)$ is the phase margin of the control loop, $\gamma(\lambda)$ is the gain margin of the control loop, $\varphi_{thres}$ is a limit on the phase margin, $\gamma_{thres}$ is the limit of the gain margin, and $\eta_1$ and $\eta_2$ are design weights of the reward function.

Methods of use for any of the controller circuits described above that comprise a transfer neural network may include the steps of training the neural network using one of a leaky rectified linear unit transfer function layer, a parametric rectified linear unit transfer function layer, and a Gaussian error linear unit for the transfer neural network, and then using a rectified linear unit transfer function for the transfer neural network for subsequent operation of the neural network, using weights obtained from the training. In some of these methods, additional training of the neural network may be performed using the rectified linear unit transfer function for the transfer neural network, before further use of the controller circuit.

The usage of a specific class of neural networks used as a controller has been described above. These networks provide interpretability of the policy learned, for example, with reinforcement learning. They therefore enable users to show stability in a mathematically meaningful manner. The described techniques combine the superior handling of nonlinear plants with reinforcement-learning-trained neural networks over PID with the interpretability of PID control systems. Therefore, typical theorems of stability of the control response and the like can be carried over to this new class of control schemes.

Notably, modifications and other embodiments of the disclosed techniques, circuits, and systems will come to mind to one skilled in the art having the benefit of the teachings presented in the foregoing descriptions and the associated drawings. Therefore, it is to be understood that the invention(s) is/are not to be limited to the specific embodiments disclosed and that modifications and other embodiments are intended to be included within the scope of this disclosure. Although specific terms may be employed herein, they are used in a generic and descriptive sense only and not for purposes of limitation.

**Claims**

1. A controller circuit, comprising:

   a controller output signal for input to a nonlinear plant;
   a controller input signal representing an error in an output of the nonlinear plant; and
   a neural network configured to calculate the controller output signal from the controller input signal by summing at least a first signal depending on a current value of the controller input signal and a second signal generated at least in part by a first neural network estimating an integral over time of the controller input signal.

2. The controller circuit of claim 1, wherein the neural network is configured to calculate the controller output by summing the first signal and the second signal with a third signal generated at least in part by a second neural network estimating a differential of the controller input signal.

3. The controller circuit of claim 2, wherein at least one of the first and second neural networks is a recurrent neural network, and, preferably, a weighted version of the first signal is linked to an input of the second recurrent neural network.

4. The controller circuit of any one of claims 1-3, wherein the input weights to the first neural network are non-trainable weights, and/or wherein the neural network is configured to calculate the controller output signal by summing the first and second signals using trainable weights.

5. The controller circuit of claim 2 or 3, wherein the neural network further comprises at least one transfer neural network having at least one output from the first and second neural networks as an input, the calculated controller output signal being based on the output of the at least one transfer neural network.

6. The controller circuit of claim 5, wherein the at least one transfer neural network comprises at least one rectified linear unit transfer function layer transforming an output x from one of the first, second, and third neurons to an output $y$ of the at least one rectified linear unit transfer function layer according to:

$$y = reLU(\vec{w} * x + \vec{b}),$$

where $\vec{w}$ is a vector of input weights, $\vec{b}$ is a bias vector, and $reLU(z) = \begin{cases} 0, & z < 0 \\ x, & z \geq 0 \end{cases}$, and, preferably, wherein at least one of the vectors $\vec{w}$ and $\vec{b}$ comprises trainable parameters.

7. The controller circuit of claim 6, wherein the at least one transfer neural network comprises three rectified linear unit transfer function layers corresponding to the first, second, and third signals, respectively.

8. The controller circuit of claim 5, wherein the at least one transfer neural network comprises any one or more of any of:

   a leaky rectified linear unit transfer function layer;
   a parametric rectified linear unit transfer function layer; and
   a Gaussian error linear unit.

9. The controller circuit of any of claims 1-8, wherein the neural network further comprises a layer clamping a sum formed from at least the first and second signals to a predetermined range.

10. The controller circuit of any of claims 1-9, wherein the neural network comprises a feedback signal, based on a sum formed from at least the first and second signals, fed into the first recurrent neural network and configured to prevent integral windup in the first recurrent neural network.

11. The controller circuit of any of claims 1-10, wherein the nonlinear plant is a power converter circuit.

12. A method of training a controller circuit according to any of claims 1-11, the method comprising: tuning trainable weights of the neural network using a reward function.

13. The method of claim 12, wherein the reward function is of the form:

$$\mathrm{P}(\lambda) = f_{bandwidth}(\lambda) - \eta_1 \max\left(0, \varphi_{thres} - \varphi(\lambda)\right) - \eta_2 \max\left(0, \gamma(\lambda) - \gamma_{thres}\right),$$

where $\lambda$ represents the trainable weights of the neural network, $f_{bandwidth}(\lambda)$ is the bandwidth of the control loop comprising the recurrent neural network, $\varphi(\lambda)$ is the phase margin of the control loop, $\gamma(\lambda)$ is the gain margin of the control loop, $\varphi_{thres}$ is a limit on the phase margin, $\gamma_{thres}$ is the limit of the gain margin, and $\eta_1$ and $\eta_2$ are design weights of the reward function.

14. The method of claim 12 or 13, wherein the neural network comprises a transfer neural network and wherein the method comprises:

   training the neural network using one of a leaky rectified linear unit transfer function layer, a parametric rectified linear unit transfer function layer, and a Gaussian error linear unit for the transfer neural network; and
   using a rectified linear unit transfer function for the transfer neural network for subsequent operation of the neural network, using weights obtained from the training.

15. The method of claim 14, further comprising:
   performing additional training of the neural network using the rectified linear unit transfer function for the transfer neural network.

**Fig. 1**

**Fig. 2**

*Fig. 3*

*Fig. 4*

**Fig. 5**

**Fig. 6**

**Fig. 7**

Europäisches
Patentamt

European
Patent Office

Office européen
des brevets

# EUROPEAN SEARCH REPORT

Application Number

EP 22 20 2001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NATHAN P LAWRENCE ET AL: "Optimal PID and Antiwindup Control Design as a Reinforcement Learning Problem", ARXIV.ORG, CORNELL UNIVERSITY LIBRARY, 201 OLIN LIBRARY CORNELL UNIVERSITY ITHACA, NY 14853, 10 May 2020 (2020-05-10), XP081910098, DOI: 10.1016/J.IFACOL.2020.12.129 * page 2 - page 4; figures 1,2 * ----- | 1-15 | INV. G06N3/045 G06N3/092 G06N3/048 G06N5/045 G05B11/42 G05B13/02 |

TECHNICAL FIELDS
SEARCHED      (IPC)

G06N

The present search report has been drawn up for all claims

| Place of search | Date of completion of the search | Examiner |
|---|---|---|
| The Hague | 31 January 2023 | Falco, Gabriele |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
....................................................................
& : member of the same patent family, corresponding
  document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RUDIN et al.** *Interpretable Machine Learning: Fundamental Principles and 10 Grand Challenges,* July 2021